(19) Europäisches Patentamt / European Patent Office / Office européen des brevets

(11) **EP 2 871 196 B1**

(12) **EUROPEAN PATENT SPECIFICATION**

(45) Date of publication and mention
of the grant of the patent:
**07.09.2016 Bulletin 2016/36**

(51) Int Cl.:
*C08G 59/24* (2006.01)   *C08G 59/50* (2006.01)
*C08G 59/62* (2006.01)   *B32B 27/38* (2006.01)
*B32B 37/15* (2006.01)   *C08G 59/56* (2006.01)
*C08K 3/22* (2006.01)

(21) Application number: **14190668.5**

(22) Date of filing: **28.10.2014**

(54) **Resin composition, resin sheet, cured resin product and substrate**

Harzzusammensetzung, Harzfolie, gehärtetes Harzprodukt und Substrat

Composition de résine, feuille de résine, produit de résine durcie et substrat

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.10.2013 JP 2013225170**

(43) Date of publication of application:
**13.05.2015 Bulletin 2015/20**

(73) Proprietor: **TDK Corporation
Tokyo 108-0023 (JP)**

(72) Inventors:
• **Sugiyama, Tsuyoshi
TOKYO, 108-0023 (JP)**
• **Shutoh, Hiroshi
TOKYO, 108-0023 (JP)**

(74) Representative: **Epping - Hermann - Fischer
Patentanwaltsgesellschaft mbH
Schloßschmidstraße 5
80639 München (DE)**

(56) References cited:
WO-A1-93/14140      WO-A1-93/15063
WO-A1-2004/113327      US-A1- 2010 016 473

**Description**

The present invention relates to a resin composition, a resin sheet, a cured resin product and a substrate.

## BACKGROUND

Recently, as the electrification of automobile power, the high integration of semiconductors and the popularity of LED lighting, the organic insulating materials, used in adhesive agent, casting agent, sealant, forming agent, laminated sheets, substrates and the like, mainly including thermosetting resins intend to heat release. For example, high thermal conductivity of 0.3W/(m • K) or more is desired.

As for a thermosetting resin with high thermal conductivity, an epoxy resin having a mesogen skeleton is known. For example, a resin composition which contains epoxy resin monomers having mesogenic groups has been disclosed in Patent Document 1. A cured resin product with high thermal conductivity can be obtained by these resin compositions. However, there is a technical problem that the resin having a mesogen skeleton usually has a high melting point, and thus has difficulty in the molding process.

In Patent Document 2, a technology has been disclosed that an epoxidation of 4,4'-dihydroxybiphenyl with a melting point of higher than 280°C is carried out in advance in order to make the melting point of the resin composition be 200°C or less. Thus, though the processing property has been improved in the molding process, the epoxidation technology is to arrange several mesogens in a line by means of soft bonds, and thus there are technical problems that the crosslinking density of the cured resin product decreases and the heat resistance of the cured resin product reduces due to separation of the crosslinking points.

Patent Document 1: JPH11-323162A

Patent Document 2: JP2004-002573A

## SUMMARY

The present invention is accomplished in view of such actual situation. The purpose of the present invention is to provide a resin composition having a melting temperature suitable for molding, a resin sheet containing the resin composition, a cured resin product with excellent thermal conductivity and heat resistance, and a substrate.

In order to solve the above technical problem, the inventors of the present invention found that the technical problem could be solved by using a combination of epoxy compounds and a curing agent selected from 1,3,5-tris(4-aminophenyl)benzene and 1,3,5-tris(4-hydroxyphenyl)benzene, and thus the present invention is completed.

The resin composition of the invention is characterized in that in the resin composition containing epoxy compounds and a curing agent selected from 1,3,5-tris(4-aminophenyl)benzene and 1,3,5-tris(4-hydroxyphenyl)benzene, the content of 1,3,5-triphenylbenzene, which is as the main skeleton of the curing agent, is 15 mass% or more and 50 mass% or less of the total organic substances in the resin composition.

The molecular structure of the main skeleton (i.e., 1,3,5-triphenylbenzene) of 1,3,5-tris(4-aminophenyl)benzene and 1,3,5-tris(4-hydroxyphenyl)benzene is rigid and has a high thermal conductivity. Therefore, the cured resin product which is the cured product of the resin composition mixed with the epoxy compound, and the substrate obtained by curing the resin sheet containing the resin composition also can obtain a high thermal conductivity. With respect to the melting temperature, since the melting point of the main skeleton i.e., 1,3,5-triphenylbenzene is as low as 180°C or less, the resin composition and the resin sheet containing the resin composition have a low melting temperature. In addition, with regard to the heat resistance, as a molecular has 3 or more crosslinking points which react with epoxy compounds and three-dimensional crosslinking is carried out through reaction, a cured resin product and a substrate with the high heat resistance can be obtained.

According to the present invention, a resin composition having a melting temperature suitable for molding, a resin sheet, a cured resin product with a high thermal conductivity and a high heat resistance, and a substrate can be provided.

## BRIEF DESCRIPTION OF THE DRAWINGS

FIG. 1 is a perspective cross-section drawing of the resin sheet according to the present embodiment.

FIG. 2 is a perspective cross-section drawing of the substrate according to the present embodiment.

## DETAILED DESCRIPTION OF EMBODIMENTS

Hereinafter, the embodiments of the present invention are described. Further, the following embodiments are examples used to illustrate the present invention, but the present invention is not limited to the embodiments. The invention can be implemented in various forms in the conditions not deviating from the main points of the invention.

The resin composition of present embodiment is a mixture containing an epoxy compound and a curing agent which can react with the epoxy compound.

The epoxy compound of the present embodiment is not particularly limited, glycidyl ethers, glycidyl esters, glycidyl amines or the like can be used, and various epoxy compounds can be applied. In order to obtain a higher thermal conductivity, an epoxy compound is preferred with a mesogen skeleton having a biphenyl skeleton, a terphenyl skeleton or the like being introduced into the molecular. Thereby, the accumulation of benzene rings between the epoxy compounds with a mesogen skeleton or between the epoxy compound with a mesogen skeleton and the main skeleton (i.e., 1,3,5-triphenylbenzene) of the curing agent becomes more dense. That is, the distance between the benzene rings becomes short. As the improvement of the accumulation connects with the improvement of the density and has a function of inhibiting the scattering caused by lattice vibration in the molecular, which will cause a decrease of the thermal conductivity of the cured resin product, it is more preferred from the viewpoint of high thermal conductivity.

In the resin composition containing an epoxy compound and a curing agent selected from 1,3,5-tris(4-aminophenyl)benzene and 1,3,5-tris(4-hydroxyphenyl)benzene, the content of 1,3,5-triphenylbenzene which is the main skeleton of the curing agent falls within the range of 15 mass% or more and 50 mass% or less of the total organic substances in the resin composition. If in such a range, the epoxy compound and the curing agent can be uniformly melted in a low melting temperature and a cured product having a high thermal conductivity and a high heat resistance can be obtained.

In the reaction with epoxy compounds, one active hydrogen of amino group or hydroxyl group is usually reacted relative to one epoxy group. Thus, the number ratio of the epoxy group of the epoxy compound and the active hydrogen is preferably 100:100.

In the curing agent for the epoxy compound of the resin composition in the present embodiment, phenols, amines, acid anhydrides and the like without 1,3,5-triphenylbenzene as the main skeleton can also be used together.

In addition, if needed, other components also can be contained. By adding a curing catalyst (a hardening accelerator) such as phosphines or imidazoles (2-ethyl-4-methyl imidazole and the like) as such ingredients, shortening of the curing time and the curing property of the resin composition can be enhanced.

Moreover, by adding coupling agent such as silane coupling agent or titanate coupling agent into the resin composition of the present embodiment, the dispersibility of the inorganic filler mixed with the resin composition can be enhanced, and the mechanical strength of the cured resin product obtained by curing the resin composition can be improved.

Flame retardant such as halogen or phosphorus compounds, diluent, plasticizer, lubricant can also be added into the resin composition of the present embodiment. By adding these substances, the properties such as flame resistance of the cured resin product, fluidity of the resin composition, flexibility or lubricating property can be improved.

After a mixing step in which the epoxy compound and the curing agent are mixed, a resin composition is obtained. If the epoxy compound and the curing agent are solid respectively, they can be crushed into powders and then mixed to obtain a powder resin composition. In addition, solvent or inorganic filler also can be added into the resin composition, stirred with a mixing device such as a mixer and mixed to be uniform and then a varnish-like resin composition is obtained.

In the case of adding a solvent into the resin composition to prepare a varnish-like resin composition, the solvent used is not particularly limited as long as it can dissolve or disperse epoxy compounds, 1,3,5-tris(4-aminophenyl)benzene and 1,3,5-tris(4-hydroxyphenyl)benzene. For example, methyl ethyl ketone, methyl cellosolve, methyl isobutyl ketone, dimethylformamide, propylene glycol monomethyl ether, toluene, xylene, acetone, N-methylpyrrolidone, $\gamma$-butyrolactone etc. and the mixture of these can be used.

In the case of adding inorganic filler into the resin composition, if non-conductive filler such as alumina, aluminum hydroxide, aluminum nitride, boron nitride, magnesia, silica and etc. is used as the inorganic filler, a non-conductive cured resin product can be obtained with a higher heat release property. Further, if conductive filler such as gold, silver, copper, nickel, tin and etc. is used, a conductive cured resin product can be obtained with a higher heat release property. These are not particularly limited and can be used in a shape properly selected from spherical, amorphous, fibrous and the like.

A resin sheet refers to a sheet-type resin composition obtained by impregnating or coating a core material such as woven fabrics or nonwoven fabrics produced by fibers or a base material such as PET film with the resin composition that has been dissolved or melted in the solvent or the like.

In the case that the epoxy compound and the curing agent are both solid, they are crushed into powders and then mixed to obtain a powder resin composition; then the powder resin composition is heated to be molten; and then the core material or the base material is immersed into the molten resin composition to obtain a resin sheet. Or the molten resin composition is spread on one surface or both surfaces of the core material or the base material by a method of coating or the like and then stood to cool or cooled down to obtain a resin sheet.

In the case of adding a solvent into the resin composition to prepare a varnish-like resin composition, the core material or the base material is soaked in the varnish-like resin composition, or the resin composition dissolved in the solvent is spread on one surface or both surfaces of the core material or the base material by a method of coating or the like, and then the solvent is removed by drying to cure the resin composition. The curing refers to a process of turning a liquid substance with fluidity to a solid state in which the substance can stand on its own feet. Usually, a semi-cured state can also be included in the cured state. For example, the resin composition can be cured under 60~150°C for about 1~120min, and preferably under 70~120°C for about 3~90min.

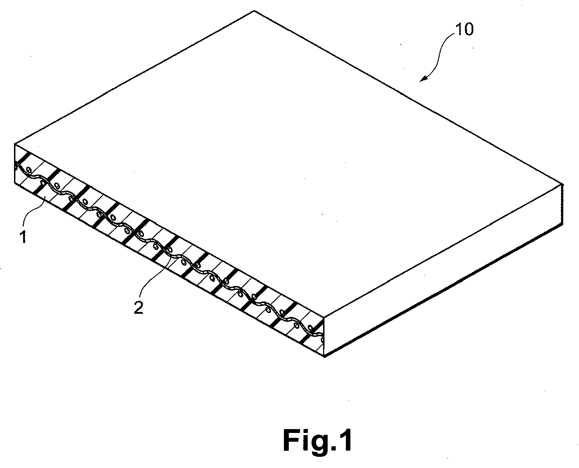

Figure 1 is an example of the structure of the resin sheet 10, wherein the two surfaces of the core material (woven fabric) 2 are covered with the resin composition 1 by coating.

As the core material 2 used in the resin sheet 10, various known materials can be properly selected and used. For example, woven fabrics or nonwoven fabrics obtained from glass fiber, carbon fiber, metal fiber, natural fiber, synthetic fiber, synthetic fibers such as polyester fiber or polyamide fiber or the like can be listed, but there is no particular restriction. These core materials 2 can be used alone or used in a combination of 2 kinds or more. Moreover, the thickness of the core material 2 can be properly set according to the thickness of the resin sheet 10 or the substrate 100, the expected mechanical strength and the size stability and etc, and it is not particularly limited. It is usually around 0.03~0.20mm.

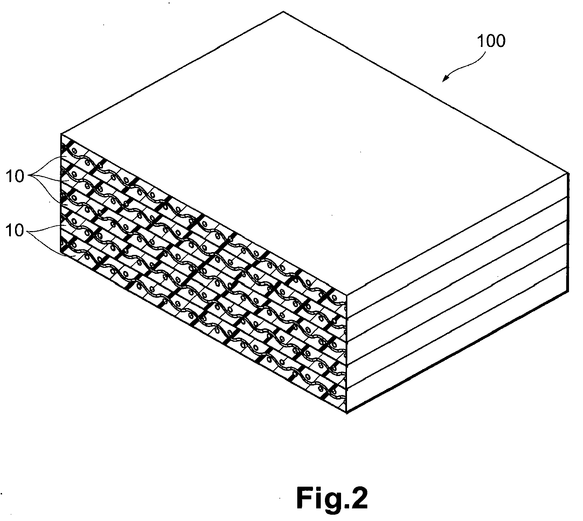

In the molding process, the resin composition or the resin sheet 10 is heated and cured to achieve a cured resin product of the cured resin composition or a substrate 100 obtained by laminating the resin sheet 10 as shown in Figure 2. In the molding process, the resin composition or the resin sheet 10 is held in a mold with predetermined shape to be heated, and then the resin composition or the resin sheet 10 is molded into a desired shape and is cured by the reaction between the epoxy compound and the curing agent.

With regard to the mold for a common substrate, a mold with a maximum temperature around 250°C is common, and thus, the melting temperature of the resin composition is preferably 200°C or less. The melting temperature of the present embodiment refers to the temperature under which the resin composition consisting of 2 compounds or more can be melted and mixed. The measurement of the melting temperature can be carried out for example by the following method. Part of the resin composition is mixed together with a spatula or the like on the hot plate. The lowest temperature for starting melting is visually confirmed, and the temperature can be regarded as the melting temperature.

A uniform cured resin product can be obtained by heating under a mold temperature of 100~250°C which is about 50°C higher than the melting temperature for around 1~300min. At this point, pressure can be applied to the resin composition or the resin sheet 10, and compression and decompression of the atmosphere gas also can be performed in the molding process if necessary.

The several resin sheets 10 are laminated, heated and pressed to obtain the substrate 100. The substrate 100 can be prepared in the molding process in which the resin sheets 10 are laminated, heated under 100~250°C for about 1~300min and pressed under a pressure of about 0.5~8MPa. Further, only one piece of the resin sheet 10 also can be used as the substrate 100.

During the production of these substrates 100, metal foils or metal plates are placed on one surface or both surfaces of the substrates 100 to prepare metal-clad substrates.

The various known metal foils or metal plates can be properly selected and used as those used in the metal-clad substrates. For example, metal foils or metal plates of copper, nickel, aluminum and the like can be listed, but they are not limited to these. Moreover, the thickness of the metal foils or metal plates is not particularly restricted and usually is about 3~150μm.

In addition, the metal-clad substrates can be applied with etching or a hole-opening process if necessary. Further, several pieces of substrates can be used as a multilayer substrate.

The thermal conductivity of the cured resin composition without the inorganic filler used in the substrate, that is the thermal conductivity of the cured resin product, is preferably 0.3W/(m • K) or more. Inorganic filler is added to improve the thermal conductivity during preparing the substrate. However, if the thermal conductivity of the cured resin product is less than 0.3W/(m • K), the thermal conductivity of the obtained substrate will hardly reach the preferred 1.5W/(m • K). If the thermal conductivity of the substrate is 1.5 W/(m • K) or less, sufficient heat release property cannot be achieved with the purpose of the substrate for LED and the like. In addition, the thermal conductivity of the substrate in the converter used in the vehicles is preferably 2.0W/(m • K) or more.

The thermal conductivity can be measured by a method such as a laser flash method.

The high heat resistance is resistance properties required the substrate having the cured resin product to maintain the strength under a temperature higher than the desired environment temperature for use. As for the evaluation of the heat resistance, it can be conducted by evaluation of the glass transition point of the cured resin product. Usually, the required using environment temperature of the base materials such as substrate and the like depends on the parts to be used and the use purposes. It is preferably around 120°C from the viewpoint that it is necessary to be equal to or higher than the heat resistance of the equipped components. Thus, the glass transition point used as the index of the heat resistance should be higher than this temperature.

EXAMPLES

Hereinafter, the present embodiment is described in detail based on the examples and the comparative examples.

(Example 1)

Mixture A (hereinafter referred to as the mixture A) with an average epoxy equivalent of 175 was prepared by epoxy compounds with 50 parts by mass of 3,3',5,5'-tetramethyl-4,4'-bis(glycidyloxy)-1,1'-biphenyl and 50 parts by mass of 4,4'-biphenyl-di-yl-bis(glycidyl ether).
Then, a powdery mixture was prepared by mixing and crushing 100 parts by mass of the mixture A of epoxy compounds and 20 parts by mass of 1,3,5-tris(4-aminophenyl)benzene used as the curing agent in a mortar in the way that relative to the number of epoxy groups of the epoxy compounds being 100, the number of active hydrogen of the amino group in 1,3,5-tris(4-aminophenyl)benzene (manufactured by Tokyo Chemical Industry Co. Ltd., the molecular weight is 351) became 60. Then, relative to the mixture, 1 part by mass of the curing catalyst of 2-ethyl-4-methyl imidazole (manufactured by Shikoku Chemicals Corporation, 2E4MZ) was further mixed into it, and then mixed with a mortar to obtain a powdery resin composition.
The resin composition was put into a cylindrical mold which had been heated to 200°C in advance and the resin composition was melted. Then the resin composition was maintained under 200°C for 2 hours and thus molded and cured to obtain the cured resin product of Example 1.

(Examples 2~7)

The cured resin products of Examples 2~7 were obtained by the same method as that of Example 1 except that 100 parts by mass of the mixture A of epoxy compounds was added and 27, 33, 67, 84, 107 and 134 parts by mass of 1,3,5-tris(4-aminophenyl)benzene used as the curing agent was added respectively in the way that relative to the number of epoxy groups of the epoxy compounds being 100, the number of active hydrogen of the amino group of 1,3,5-tris(4-aminophenyl)benzene became 80, 100, 200, 250, 320, 400 respectively, and then mixed with a mortar.

(Example 8)

The cured resin product of Example 8 was obtained by the same method as that of Example 1 except that 100 parts by mass of the mixture A of epoxy compounds and 67 parts by mass of 1,3,5-tris(4-hydroxyphenyl)benzene used as the curing agent were added in the way that relative to the number of epoxy groups of the epoxy compounds being 100, the number of active hydrogen of the hydroxyl group of 1,3,5-tris(4-hydroxyphenyl)benzene (the molecular weight is 354) became 100, and then mixed with a mortar.

(Example 9)

100 parts by mass of N,N,N',N'-tetraglycidyl-4,4'-diamino diphenyl methane of the epoxy compound and 50 parts by mass of 1,3,5-tris(4-aminophenyl)benzene used as the curing agent were added in the way that relative to the number of epoxy groups of the epoxy compounds being 100, the number of active hydrogen of the amino group of 1,3,5-tris(4-aminophenyl)benzene became 100, and then mixed with a mortar to prepare a mixture. Then, relative to the mixture, 1 part by mass of the curing catalyst of 2-ethyl-4-methyl imidazole (manufactured by Shikoku Chemicals Corporation, 2E4MZ) was further mixed into, and then blended and mixed with a mortar to obtain a resin composition.
Next, the resin composition obtained in the mixing step was put into a cylindrical mold which had been heated to 200°C in advance, and then the resin composition was melted. Then the resin composition was maintained under 200°C for 2 hours and thus molded and cured to obtain the cured resin product of Example 9.

(Example 10)

134 parts by mass of the resin composition before curing of Example 3 was mixed with methyl ethyl ketone to prepare a liquid resin composition with a solid content of 20 mass%. Relative to the resin composition, 350 parts by mass of alumina beads (manufactured by Denki Kagaku Kogyo K.K., the trade name is DAW-7) was added and then mixed and dispersed with a shear mixer to prepare a resin-filler dispersion liquid. Further, in the drying step, the resin-filler solution was impregnated in a textile fabrics produced from glass fibers with a thickness of 0.05mm and a cloth weight of 50g/m$^2$, and then was heated and dried under 100°C. Then a resin sheet with a cloth weight of 350g/m$^2$ was obtained.

Next, in the molding step, 6 pieces of the obtained resin sheets were laminated, and heated and pressed with a flat plate in a condition of 170°C and 1MPa for 20min, and then further heated and pressed in a condition of 200°C and 4MPa for 1 hour to obtain a substrate with a thickness of 0.9mm.

(Comparative Examples 1~2)

The cured resin products were obtained by the same method as that of Example 1 except that 100 parts by mass of the mixture A of epoxy compounds was added, and 13 and 151 parts by mass of 1,3,5-tris(4-aminophenyl)benzene used as the curing agent was added respectively in the way that relative to the number of epoxy groups of the epoxy compounds being 100, the number of active hydrogen of the amino group of 1,3,5-tris(4-aminophenyl)benzene became 40 and 450 respectively, and then stirred and mixed.

(Comparative Example 3)

Tried to prepare a resin composition by the same way as that of Example 1 except that 100 parts by mass of the mixture A of epoxy compounds and 37 parts by mass of 4,4"-diamino-p-terphenyl (manufactured by Tokyo Chemical Industry Co. Ltd., the molecular weight is 260) used as the curing agent were stirred and mixed in the way that relative to the number of epoxy groups of the epoxy compounds being 100, the number of active hydrogen of the amino group of 4,4"-diamino-p-terphenyl became 100.

(Comparative Example 4)

Tried to prepare a resin composition by the same way as that of Example 1 except that 100 parts by mass of the mixture A of epoxy compounds and 79 parts by mass of 4,4"-dihydroxy-3-methyl-p-terphenyl (manufactured by Honshu Chemical Industry Co. Ltd., the molecular weight is 276) used as the curing agent were stirred and mixed in the way that relative to the number of epoxy groups of the epoxy compounds being 100, the number of active hydrogen of the hydroxyl group of 4,4"-dihydroxy-3-methyl-p-terphenyl became 100.

(Comparative Example 5)

28 parts by mass of 4,4'-dihydroxybiphenyl (the hydroxyl equivalent is 93) was added into 100 parts by mass of the mixture A, and then heated under 165°C for 10 hours to be melted. After stirring and making them react at the same time in the three-necked flask, they were cooled down at room temperature to prepare a prepolymer A. The cured resin product of Comparative Example 5 was obtained by the same method as that of Example 1 except that 100 parts by mass of the prepolymer A and 8 parts by mass of 1,5-diaminonaphthalene (the active hydrogen equivalent is 79, melting point=187°C) were stirred and mixed with a mortar to prepare a mixture in the way that relative to the number of epoxy groups of the prepolymer A being 100, the number ratio of active hydrogen became 100.

(Comparative Example 6)

109 parts by mass of the resin composition before curing of Comparative Example 5 was mixed with methyl ethyl ketone to prepare a liquid resin composition with a solid content of 20 mass%. Relative to the resin composition, 284 parts by mass of alumina beads (manufactured by Denki Kagaku Kogyo K.K., the trade name is DAW-7) was added in the way that the mass ratio was the same as that in Example 10, and then stirred and dispersed with a shear mixer to prepare a resin-filler dispersion liquid. Further, in the drying step, the resin-filler solution was filled into a textile fabrics produced from glass fibers with a thickness of 0.05mm and a cloth weight of 50g/m$^2$, and then was heated and dried under 100°C. Then a resin sheet with a cloth weight of 350g/m$^2$ was obtained.

Next, in the molding step, 6 pieces of the obtained resin sheets were laminated, and heated and pressed with a flat plate in a condition of 170°C and 1MPa for 20min, and then further heated and pressed in a condition of 200°C and 4MPa for 1 hour to obtain a substrate with a thickness of 0.9mm.

The melting temperature of resin composition, the thermal conductivity and the glass transition point of the cured resin product and the substrate were measured with regard to each sample of the examples and comparative examples. The results were shown in Table 1. The evaluation methods were described as follows.

(Evaluation of the melting temperature)

Evaluation of the melting temperature was carried out by the following method. The resin composition was mixed with a spatula on the hot plate and the lowest temperature for melting is visually confirmed and was deemed as the melting temperature.

(Evaluation of the thermal conductivity)

A measurement of the thermal conductivity of the cured resin product and the substrate was carried out as the evaluation of the thermal conductive property. The cured resin products and the substrates were processed into discs with a diameter of 10mm and a thickness of 0.9mm to prepare testing samples. The measurement of thermal diffusivity coefficient $\alpha$ (cm$^2$/s) of the obtained the testing sample was carried out with a measuring apparatus of thermal conductivity (manufactured by ULVAC-RIKO, Inc., TC Series). Specific heat Cp (J/g · K) was measured by differential thermal analysis (DSC) using sapphire as a standard sample. Density r (g/cm$^3$) was measured by Archimedes method.

The measured values obtained was used in the following formula (1) to calculate the thermal conductivity $\lambda$ (W/(m · K)).

$$\lambda = \alpha \cdot Cp \cdot r \qquad \text{formula (1)}$$

$\alpha$: thermal diffusivity coefficient (cm$^2$/s)

Cp: specific heat (J/g · K)

r: density (g/cm$^3$)

(Evaluation of the glass transition point)

The evaluation of heat resistance of the cured resin product and the substrate was carried out by evaluation of the glass transition point with DMA method. Herein, it was determined that the sample with a glass transition point of 120°C or more could achieve a sufficient heat resistance property.

(DMA method)

The cured resin products and the substrates were cut into a shape of 3mm×25mm to prepare samples. Then, storage modulus was measured from 25°C to 300°C in an atmosphere with a heating rate of 5°C/min using a dynamic viscoelasticity measuring apparatus (manufactured by Rheology Corporation, DVE-V4 type). The inflexion point of the storage modulus was deemed as the glass transition point (Tg).

[Table 1]

| Items | Substance Name | Examples | | | | | | | | | | Comparative Examples | | | | | |
|---|---|---|---|---|---|---|---|---|---|---|---|---|---|---|---|---|---|
| | | 1 | 2 | 3 | 4 | 5 | 6 | 7 | 8 | 9 | 10 | 1 | 2 | 3 | 4 | 5 | 6 |
| Epoxy compound (part by mass) | Mixture A | 100 | 100 | 100 | 100 | 100 | 100 | 100 | 100 | | 100 | 100 | 100 | 100 | 100 | | |
| | N,N,N',N'-tetraglycidyl-4,4'-diamino diphenyl methane | | | | | | | | | 100 | | | | | | | |
| | Prepolymer A | | | | | | | | | | | | | | | 100 | 100 |
| Curing agent (part by mass) | 1,3,5-tris(4-aminophenyl)benzene | 20 | 27 | 33 | 67 | 84 | 107 | 134 | | 50 | 33 | 13 | 151 | | | | |
| | 1,3,5-tris(4-hydroxyphenyl)benzene | | | | | | | | 67 | | | | | | | | |
| | 4,4"-diamino-p-terphenyl | | | | | | | | | | | | 37 | | | | |
| | 4,4"-dihydroxy-3-methyl-p-terphenyl | | | | | | | | | | | | | 79 | | | |
| | 1,5-diaminonaphthalene | | | | | | | | | | | | | | | 8 | 8 |
| Curing catalyst | 2-ethyl-4-methyl imidazole | 1 | 1 | 1 | 1 | 1 | 1 | 1 | 1 | 1 | 1 | 1 | 1 | 1 | 1 | 1 | 1 |
| Filler (part by mass) | Alumina beads | | | | | | | | | | 350 | | | | | | 284 |
| Mixing ratio | Content of 1,3,5-triphenylbenzene (mass%) | 15 | 18 | 22 | 35 | 40 | 45 | 50 | 35 | 29 | 22 | 10 | 52.5 | 0 | 0 | 0 | 0 |
| | Number of active hydrogen relative to epoxy groups being 100 | 60 | 80 | 100 | 200 | 250 | 320 | 400 | 100 | 100 | 100 | 40 | 450 | 100 | 100 | 100 | 100 |
| Properties of the resin composition | Melting temperature of the composition (°C) | 120 | 120 | 120 | 140 | 150 | 150 | 180 | 120 | 120 | 120 | 110 | 180 | 210 | 230 | 130 | 130 |

(continued)

| Items | Substance Name | Examples | | | | | | | | | | Comparative Examples | | | | | |
|---|---|---|---|---|---|---|---|---|---|---|---|---|---|---|---|---|---|
| | | 1 | 2 | 3 | 4 | 5 | 6 | 7 | 8 | 9 | 10 | 1 | 2 | 3 | 4 | 5 | 6 |
| Properties of the cured resin product | Thermal conductivity W/(m·K) | 0.30 | 0.31 | 0.32 | 0.32 | 0.32 | 0.31 | 0.30 | 0.32 | 0.30 | 2.6 | 0.27 | 0.25 | - | - | 0.27 | 1.4 |
| | Glass transition point (°C) | 150 | 155 | 169 | 156 | 137 | 133 | 120 | 161 | 176 | 170 | 142 | 100 | - | - | 110 | 110 |

It could be confirmed from the results of Examples 1~7 and Example 9 that in the resin composition containing the epoxy compound and 1,3,5-tris(4-aminophenyl)benzene which was used as the curing agent, the melting temperature of the resin composition was 200°C or less, the glass transition point of the cured resin product was 120°C or more and the thermal conductivity was 0.3W/(m • K) or more by making the content of 1,3,5-triphenylbenzene which was the main skeleton of the curing agent fall within the range of 15 mass% or more and 50 mass% or less of the total organic substances in the resin composition.

In addition, it could be confirmed from the result of Example 8 that in the resin composition containing epoxy compounds and 1,3,5-tris(4-hydroxyphenyl)benzene which was used as the curing agent, the melting temperature of the resin composition was 200°C or less, the glass transition point of the cured resin product was 120°C or more and the thermal conductivity was 0.3W/(m •K) or more by making the content of 1,3,5-triphenylbenzene which was the main skeleton of the curing agent be 35 mass% of the total organic substances in the resin composition.

Additionally, it could be confirmed from the results of Examples 3 and 10 that in the resin composition containing epoxy compounds and 1,3,5-tris(4-aminophenyl)benzene which was used as the curing agent, the thermal conductivity of the cured resin product was 0.32W/(m •K), the thermal conductivity of the substrate prepared by adding alumina beads as the inorganic filler was 2.6W/(m • K), and the thermal conductivity of the substrate was the preferred range of 1.5W/(m • K) or more, and thus sufficient thermal conductive property was shown.

In Comparative Example 1, in the resin composition containing epoxy compounds and 1,3,5-tris(4-aminophenyl)benzene which was used as the curing agent, the content of 1,3,5-triphenylbenzene which was the main skeleton of the curing agent was 10 mass% of the total organic substances in the resin composition, and thus the thermal conductivity of the cured resin product resulted to be less than 0.3W/ (m • K).

In Comparative Example 2, in the resin composition containing epoxy compounds and 1,3,5-tris(4-aminophenyl)benzene which was used as the curing agent, the content of 1,3,5-triphenylbenzene which was the main skeleton of the curing agent was 52.5 mass% of the total organic substances in the resin composition, and thus the thermal conductivity of the cured resin product resulted to be less than 0.3W/ (m • K).

In Comparative Example 3 and Comparative Example 4, since the curing agent without 1,3,5-triphenylbenzene as the main skeleton of the curing agent was applied, the melting temperature of the resin composition was high. Although the resin composition was put into a cylindrical mold which had been pre-heated to 200°C to be melted, it could not be melted.

In Comparative Example 5, it could be confirmed that the melting temperature of the resin composition was 200°C or less through epoxidation of 4,4'-dihydroxybiphenyl. However, the glass transition point of the cured resin product was 110°C, and in the substrate having the cured resin product, the glass transition point was lower than the desired using environment temperature i.e., 120°C. In addition, the thermal conductivity of the cured resin product resulted to be less than 0.3W/(m • K).

It could be confirmed from the results of Comparative Examples 5 and 6 that the melting temperature of the resin composition was 200°C or less through epoxidation of 4,4'-dihydroxybiphenyl. However, the glass transition point of the cured resin product was 110°C and the glass transition point was lower than the desired using environment temperature i.e., 120°C in the substrate having the cured resin product. In addition, the thermal conductivity of the cured resin product resulted to be less than 0.3W/(m • K). Thus, the thermal conductivity of the substrate obtained by adding alumina beads as the inorganic filler was 1.4W/(m • K) and the preferred thermal conductivity of the substrate of 1.5W/(m • K) was not achieved.

It could be known from the above results that in the resin composition containing the epoxy compounds and the curing agent selected from 1,3,5-tris(4-aminophenyl)benzene and 1,3,5-tris(4-hydroxyphenyl)benzene, by making the content of 1,3,5-triphenylbenzene which was the main skeleton of the curing agent be 15 mass% or more and 50 mass% or less of the total organic substances in the resin composition, the melting temperature of the resin composition could turn to be 200°C or less which was suitable to be molded. Further, a cured resin product with a high heat resistance property could be obtained by curing these resin compositions. Moreover, as for the resin sheets containing these resin compositions, the melting temperature of the resin composition was 200°C or less, and thus the sheets had an excellent molding property. If several such resin sheets were laminated, molded and cured, a substrate with a high thermal conductivity and a high heat resistance could be obtained.

The resin composition according to the present invention is excellent in the melting property. Since the cured resin product obtained by curing the resin composition and the substrate obtained by molding and curing the resin sheet containing the resin composition are excellent in the thermal conductivity and heat resistance, they can be widely and effectively used as modules and electronic components such as substrate mounted on electronic components, heat-releasing sheet, insulating material and the like in the field of electronic device materials requiring high thermal conductivity.

DESCRIPTION OF BEFERENCE NUMERALS

1       Resin composition

2       Core material (woven fabric)

10      Resin sheet

100     Substrate

**Claims**

1.  A resin composition comprising epoxy compounds and a curing agent selected from 1,3,5-tris(4-aminophenyl)benzene and 1,3,5-tris(4-hydroxyphenyl)benzene,
    wherein, the content of 1,3,5-triphenylbenzene which is the main skeleton of said curing agent, is 15 mass% or more and 50 mass% or less of the total organic substances in said resin composition.

2.  A resin sheet comprising the resin composition according to claim 1.

3.  A cured resin product obtained by curing the resin composition according to claim 1.

4.  A substrate obtained by laminating, molding and curing one or several resin sheets according to claim 2.

**Patentansprüche**

1.  Harzzusammensetzung, umfassend Epoxidverbindungen und ein aus 1,3,5-Tris(4-aminophenyl)benzol und 1,3,5-Tris(4-hydroxyphenyl)benzol ausgewähltes Härtungsmittel,
    wobei der Gehalt an 1,3,5-Triphenylbenzol, bei dem es sich um das Hauptgerüst des Härtungsmittels handelt, 15 Massen-% oder mehr und 50 Massen-% oder weniger der gesamten organischen Substanzen in der Harzzusammensetzung beträgt.

2.  Harzplatte, umfassend die Harzzusammensetzung nach Anspruch 1.

3.  Gehärtetes Harzprodukt, erhalten durch Härten der Harzzusammensetzung nach Anspruch 1.

4.  Substrat, erhalten durch Laminieren, Formen und Härten einer oder mehrerer Harzplatten nach Anspruch 2.

**Revendications**

1.  Composition de résine comprenant des composés époxy et un agent de durcissement choisi parmi le 1,3,5-tris(4-aminophényl)benzène et 1,3,5-tris(4-hydroxyphényle)benzène,
    la teneur en 1,3,5-triphénylbenzène qui est le squelette principal dudit agent de durcissement, constituant 15 % en masse ou plus et 50 % en masse ou moins de la totalité des substances organiques dans ladite composition de résine.

2.  Feuille de résine comprenant la composition de résine selon la revendication 1.

3.  Produit de résine durci obtenu par durcissement de la composition de résine selon la revendication 1.

4.  Substrat obtenu par laminage, moulage et durcissement d'une ou de plusieurs feuilles de résine selon la revendication 2.

**Fig.1**

**Fig.2**

**EP 2 871 196 B1**

**REFERENCES CITED IN THE DESCRIPTION**

**Patent documents cited in the description**

- JP H11323162 A
- JP 2004002573 A